# EUROPÄISCHE PATENTSCHRIFT

(11) **EP 2 174 035 B1**
(45) Veröffentlichungstag und Bekanntmachung des Hinweises auf die Patenterteilung: **25.05.2011**
(21) Anmeldenummer: 08784869.3
(22) Anmeldetag: 18.07.2008
(51) Int. Cl.: F16D 65/12

(54) **SCHEIBENBREMSE**
DISK BRAKE
FREIN À DISQUE

(30) Priorität: 31.07.2007 DE 102007035829
(43) Veröffentlichungstag der Anmeldung: 14.04.2010
(73) Patentinhaber: Daimler AG, 70327 Stuttgart (DE)
(72) Erfinder: BOTSCH, Siegfried, 71120 Grafenau (DE); JÄCKEL, Klaus, 89278 Nersingen (DE); LESCH, Martin, 71336 Waiblingen (DE); QUINGER, Christian, 73614 Schorndorf (DE); WILKE, David, 71573 Allmersbach im Tal (DE)
(74) Vertreter: JENSEN & SON
(86) Internationale Anmeldenummer: PCT/EP2008/005889
(87) Internationale Veröffentlichungsnummer: WO 2009/015786

(56) Entgegenhaltungen:
- EP-A- 0 014 483
- EP-A- 0 198 217
- WO-A-02/33280
- WO-A-03/019032
- DE-A1- 10 125 113
- US-B1- 6 446 765

## Beschreibung

Die Erfindung betrifft eine Scheibenbremse , insbesondere für einen Kraftwagen, der im Oberbegriff des Patentanspruchs 1 angegebenen Art. Des Weiteren betrifft die Erfindung ein Verfahren zum Zusammenbau einer derartigen Scheibenbremse , insbesondere für einen Kraftwagen, der im Oberbegriff des Patentanspruchs 6 angegebenen Art. So eine Scheibenbremse geht z.B. aus - US-B-6 446 765 hervor.

Eine derartige Scheibenbremse ist beispielsweise bereits aus der DE 199 18 069 B4 oder aus der DE 198 39 763 B4 als bekannt zu entnehmen. Dabei ist die jeweilige Scheibenbremse zweiteilig ausgebildet und umfasst neben einer Radnabe einen Reibring, welcher radial durch eine Formschlussverbindung - insbesondere eine Keilwellenverbindung - und axial durch eine Mehrzahl von Sicherungselementen fest mit der Radnabe verbunden ist. Die Sicherungselemente werden dabei im Wesentlichen durch Zwischenelemente gebildet, welche zwischen radnabenseitigen Noppen bzw. Zähnen und reibringseitigen Abstützelementen, welche die Formschlussverbindung bilden, in Umfangsrichtung erstreckende Zwischenräume ragen und damit unter anderem die axiale Festlegung des Reibrings an der Radnabe gewährleisten.

Eine Problematik bei derartigen Bremsscheiben ist es, dass beispielsweise bei einer einseitig angebundenen Bremsscheibe - in Folge ungleicher Temperaturenverteilungen - eine Schirmung des Reibrings bzw. der Bremsscheibe insgesamt auftreten kann. Durch diese Schirmung und eine ungleiche Temperaturverteilung in Reibring treten grundsätzliche Spannungen auf, welche zu Rissen, so genannten Heißrissen, an der Oberfläche des Reibrings führen können.

Aufgabe der vorliegenden Erfindung ist es daher, eine Bremsscheibe sowie ein Verfahren zum Zusammenbau einer solchen Scheibenbremse zu schaffen, bei welchen eine einfache und schnelle Montage des Reibrings an der Radnabe beziehungsweise des Bremsentopfes möglich ist, bei welchen Gefahr einer Rissbildung deutlich reduziert wird und die Kühlluftführung verbessert wird.

Diese Aufgabe wird erfindungsgemäß durch eine Scheibenbremse sowie einem Verfahren zum Zusammenbau einer solchen Bremsscheibe und Scheibenbremse mit den Merkmalen der Patentansprüche 1 bzw. 6 gelöst. Vorteilhafte Ausgestaltungen mit zweckmäßigen und nicht-trivialen Weiterbildungen der Erfindung sind in den abhängigen Patentansprüchen angegeben.

Um eine Scheibenbremse mit Bremsscheibe, insbesondere für einen Kraftwagen, zu schaffen, welcher einerseits eine einfache Montage des Reibrings an der Radnabe ermöglicht und bei welcher andererseits die Gefahr von Rissbildungen deutlich reduziert ist, ist es erfindungsgemäß vorgesehen, dass das wenigstens eine axiale Sicherungselement in einer radial innerhalb des Reibrings verlaufenden Aufnahmeöffnung angeordnet ist, wobei der Reibring im Bereich der Aufnahmeöffnung relativ zu dem Sicherungselement radial bewegbar ist. Mit anderen Worten ist es vorgesehen, wenigstens ein axiales Sicherungselement vorzusehen, welches sich radial innerhalb des Reibrings erstreckt, so dass hierdurch eine einfache Fixierung des Reibrings in Axialrichtung der Radnabe geschaffen ist.

Um dabei jedoch eine in Folge einer ungleichen Temperaturverteilung auftretende Schirmung der Bremsscheibe bzw. des Reibrings zu vermeiden, ist dieser im Bereich der Aufnahmeöffnung relativ zu dem Sicherungselement radial bewegbar. Durch diese radiale Bewegbarkeit kann sich somit der Reibring bei einer entsprechenden Temperaturverteilung frei in axialer Richtung ausdehnen, ohne dass durch das Sicherungselement entsprechenden Kräfte in den Reibring eingetragen werden, welche zu einer Schirmung bzw. Verformung - und damit einhergehend - einer Rissbildung führen könnten. Durch die Verringerung der Bremsscheibenschirmung und der Wärmespannungen neigt die Bremsscheibe bzw. der Reibring somit nicht so schnell zur Rissbildung, wodurch insgesamt größere Standzeiten der Bremsscheibe und der Bremsbeläge bzw. der Reibrings erreicht werden können.

Das Sicherungselement umfasst eine mittels einer Schraube an der Radnabe befestigte Hülse, welche die Schraube außenumfangsseitig umgibt. Durch eine derartige Hülse kann auf einfache Weise die erwünschte freie Bewegbarkeit des Reibrings in radialer Richtung relativ zu dem Sicherungselement erreicht werden.

Die Aufnahmeöffnung als ist Durchgangsöffnung ausgebildet, welche den Reibring von einer Außenumfangsseite bis zur Radnabe radial durchsetzt. Damit ist eine einfache Festlegung des Sicherungselements möglich. Dabei hat es sich in weiterer Ausgestaltung der Erfindung insbesondere als vorteilhaft gezeigt, wenn die Schraube von der Außenumfangsseite des Reibrings her eingeschraubt ist, wobei ein Schraubenkopf im Querschnitt kleiner bemessen ist als die Aufnahmeöffnung. Durch diese Ausgestaltung kann somit das Sicherungselement bzw. die Hülse von Außenumfangsseite her mittels der Schraube festgelegt werden, wodurch sich eine besonders einfache Montage realisieren lässt. Da der Schraubenkopf dabei im Querschnitt kleiner bemessen ist als die Aufnahmeöffnung, ist gewährleistet, dass sich der Reibring in radialer Richtung relativ zu dem Sicherungselement bewegen kann.

Schließlich hat es sich als vorteilhaft gezeigt, wenn eine Mehrzahl von Sicherungselementen vorgesehen ist, die in vorzugsweise gleichen gegenseitigen Winkel angeordnet sind. Hierdurch wird auf zuverlässige Weise eine Schirmung des Reibrings bzw. der Bremsschreibe besonders gut vermieden, und damit einhergehend die Gefahr einer Rissbildung deutlich minimiert.

Die vorstehend im Zusammenhang mit der erfindungsgemäßen Scheibenbremse angegebenen Vorteile gelten in ebensolcher Weise für das Verfahren zum Zusammenbau einer derartigen Scheibenbremse gemäß Patentanspruch 6.

Weitere Vorteile, Merkmale und Einzelheiten der Erfindung ergeben sich aus der nachfolgenden Beschreibung eines bevorzugten Ausführungsbeispiels sowie anhand von Zeichnungen.

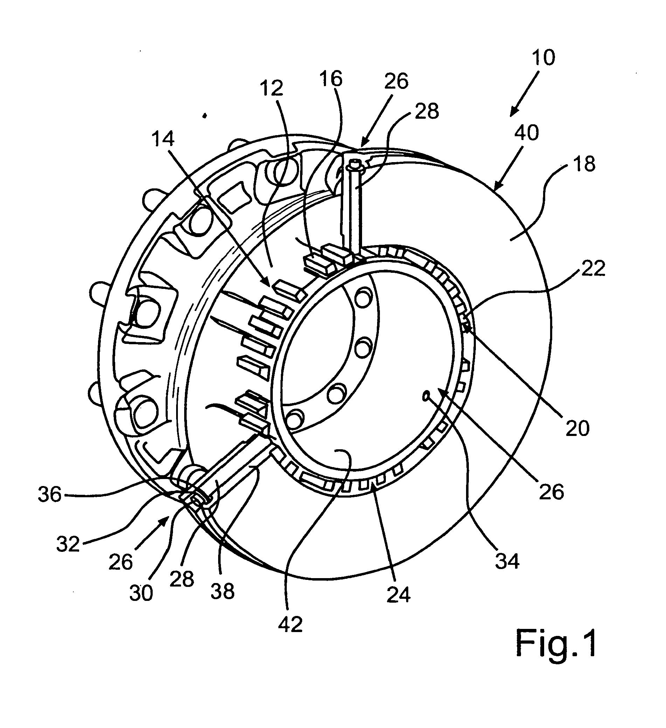

Fig. 1 zeigt eine Perspektivansicht auf eine zweiteilige Scheibenbremse eines Lastkraftwagens mit einer Radnabe und einem teilweise geschnittenen Reibring, welche radial durch eine Formschlussbindung und axial durch drei Sicherungselemente fest miteinander verbunden sind, wobei die drei Sicherungselemente einer jeweils zugeordneten, radial innerhalb des Reifrings verlaufenden Aufnahmeöffnung angeordnet sind, wobei der Reibring im Bereich der jeweiligen Aufnahmeöffnung relativ zu dem jeweiligen Sicherungselement in radialer Richtung bewegbar ist, und wobei die jeweiligen Sicherungselemente durch Hülsen gebildet sind, welche mittels von Schrauben an der Radnabe festgelegt sind.

Von einer Scheibenbremse eines Kraftwagens, vorliegend insbesondere eines Lastkraftwagens, ist in der Figur 1 eine Radnabe 10 in einer schematischen Perspektivansicht erkennbar, welche in einem Flanschbereich 12 außenumfangsseitig mit einer entsprechenden Verzahnung 14 mit einer Mehrzahl von Zähnen 16, welche in axialer Richtung der Radnabe 10 verlaufen, versehen ist.

Auf den Flanschbereich 12 der Radnabe 10 ist ein Reibring 18 aufgesteckt, welcher an seiner Innenumfangsseite 20 mit einer zur radnabenseitigen Außenverzahnung 14 hin korrespondierenden Innenverzahnung 22 versehen ist. Durch die Außenverzahnung 14 der Radnabe 10 bzw. der Innenverzahnung 22 des Reibrings 18 ist somit eine Formschlussverbindung bzw. eine formschlüssige Welle - Nabe - Verbindung in radialer Richtung geschaffen. Mit anderen Worten ist hierdurch der Reibring 18 und eine vorliegende Formschlussverbindung 24 in axialer Richtung bzw. in Umfangsrichtung an der Radnabe 10 festgelegt. Die Formschlussverbindung 24 ist dabei vorliegend insbesondere als Keilwellen- bzw. Evolventen-Verbindung gestaltet.

Des Weiteren ist aus der Figur 1 erkennbar, dass der durch die Formschlussverbindung 24 an sich axial der Radnabe 10 verschiebbare Reibring 18 dadurch axial gesichert an der Radnabe 10 gehalten ist, da eine Mehrzahl von axialen Sicherungselementen 26 vorgesehen sind. Im vorliegenden Ausführungsbeispiel sind drei derartige Sicherungselemente 26 vorgesehen, wobei der Reibring 18 derart ausgeschnitten ist, dass die Schnitte im Anordnungsbereich von zwei Sicherungselementen 26 verlaufen.

Jedes der Sicherungselemente 26 umfasst eine rohrartige Hülse 28 mit einer entsprechenden nicht erkennbaren zentralen Öffnung, innerhalb welcher eine zugeordnete Schraube 30 verläuft. Die Schraube 30 ist dabei mit ihrem einem Schraubenkopf 32 abgewandten jeweiligen Ende in eine zugehörige Gewindebohrung 34 in den Flanschbereich 12 der Radnabe 10 eingeschraubt, wodurch die Hülse 28 entsprechend festgelegt ist. Dabei umfasst die Schraube 30 einen unterhalb des Schraubenkopfes 32 angeordneten Scheibenkragen 36, welcher sich auf der Hülse 28 abstützt.

Das jeweilige Sicherungselement 26 - also die jeweilige Schraube 30 und die jeweilige Hülse 28 - sind innerhalb einer korrespondierenden Aufnahmeöffnung 38 angeordnet, welche den Reibring 18 von einer Außenumfangsseite 40 bis zur Innenumfangsseite 20 bzw. der Radnabe 10 radial durchsetzt und demzufolge als Durchgangsöffnung ausgebildet ist. Die jeweilige Schraube 30 ist dabei von der Außenumfangsseite 40 her eingeschraubt. Dabei ist im Bereich des jeweiligen Schraubenkopfs 32 eine Senkung die Aufnahmeöffnung 38 eingebracht. An dieser Stelle ist jedoch festzuhalten, dass der Schraubenkopf 32 bzw. der Scheibenkragen 36 im Querschnitt höchstens gleich groß ausgebildet sind wie der Querschnitt der Hülse 28. Insbesondere ist der Schraubenkopf 32 und der Scheibenkragen 36 sogar im Querschnitt zumindest geringfügig geringer ausgebildet als der Querschnitt der Hülse 28, die den Schraubenschaft außenumfangsseitig umgibt.

Aus der Figur 1 ist des Weiteren erkennbar, dass die drei Sicherungselemente 26 in einem gleichen gegenseitigen Winkel von vorliegend etwa 120 Grad zueinander verteilt angeordnet sind, und zwar so, dass sich die Sicherungselemente 26 - bzw. die jeweiligen Hülsen 28 und die jeweiligen Schrauben 30 - radial bzw. strahlenförmig zur Achse der Radnabe 10 bzw. des Reibrings 18 erstrecken. Als im Rahmen der Erfindung mitumfasst ist es zu betrachten, dass natürlich auch eine andere Anzahl von Sicherungselementen 26 vorgesehen sein könnte, um den Reibring 18 axial der Radnabe 10 zu sichern.

Da die Schraubenköpfe 32 bzw. die Scheibenkragen 36 im Querschnitt betrachtet zumindest nicht größer ausgebildet sind als der Querschnitt der jeweiligen Hülse 28, wird somit erreicht, dass der Reibring 18 im Bereich der jeweiligen Aufnahmeöffnung 38 relativ zu dem korrespondierenden Sicherungselement 26 radial bewegbar ist. Diese radiale Bewegbarkeit ist insbesondere erforderlich, um thermische Ausdehnungen bzw. ungleiche Temperaturverteilungen des Reibrings 18 ausgleichen zu können. Da der Reibring 18 nämlich in radialer Richtung nicht durch die Sicherungselemente 26 festgelegt ist, kann dessen Kontur insbesondere im Bereich der Außenumfangsseite 40 entsprechend der jeweiligen Temperaturverteilung variieren. Mit anderen Worten ist der Reibring 18 im Bereich der jeweiligen Aufnahmeöffnung 38 in radialer Öffnung frei beweglich bzw. schwimmend mittels der Sicherungselemente 26 gehalten. Hierdurch wird ein Eintrag von Spannungen über die Sicherungselemente 26 verhindert. An dieser Stelle sei angemerkt, dass die Hülsen 38 im Querschnitt an denjenigen der Aufnahmeöffnungen 38 angepasst sind. Hierdurch wird einerseits die gewünschte axiale Festlegung des Reibrings 18 mittels der Sicherungselemente 26 erreicht, und andererseits die geführte freie Ausdehnung des Reibrings 18 in radialer Richtung gewährleistet.

Als im Rahmen der Erfindung mitumfasst ist es zu betrachten, dass die Hülsen 28 auch an einer Innenumfangsseite 42 des Flanschbereichs 12 eingeschraubt sein könnten. Im überwiegenden Fall ist jedoch durch die Verschraubung der Schrauben 30 von der Außenumfangsseite 40 des Reibrings 18 her eine bedeutend einfache Montage möglich.

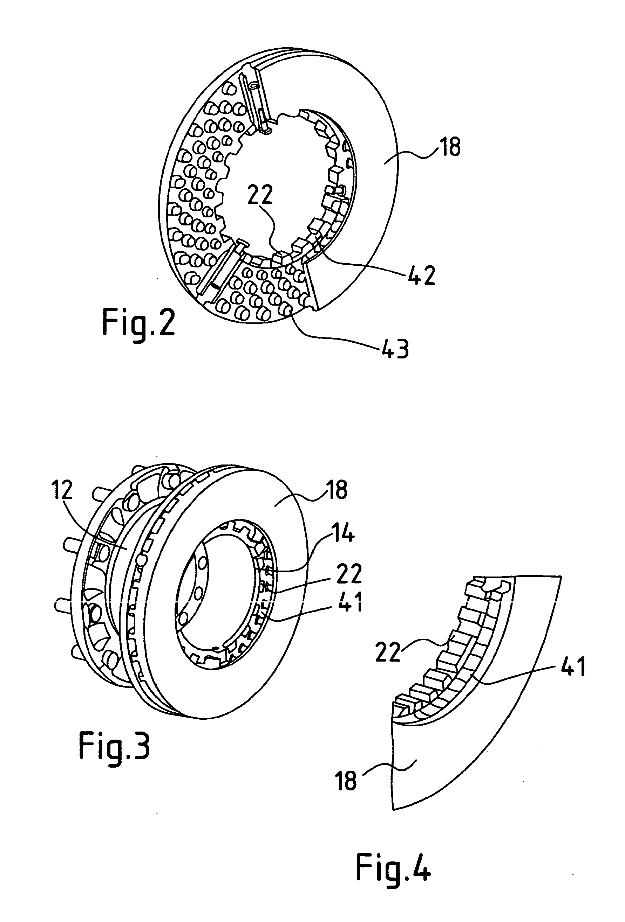

Der Reibring ist mit Lüftungskanälen versehen. Die Kanäle können dabei beispielsweise durch durchgehende Stege oder auch durch eine Vielzahl von Verbindungszapfen zwischen den beiden Seiten des Reibringes gebildet sein. Derartige Ausgestaltungen sind beispielhaft in den Fig. 2, 3 und 4 wiedergegeben. Die Lüftungskanäle verlaufen innerhalb des Reibringes und sind zumindest nach außen, das heißt zum äußeren Umfang des Reibrings geöffnet, um Luft eintreten bzw. austreten zu lasen. Besonders bevorzugt sind die Lüftungskanäle zumindest zum Teil nach innen, also in Richtung auf den Flanschbereich geöffnet. In Fig. 2 werden die Lüftungskanäle durch eine Vielzahl von Verbindungszapfen (43) gebildet. Hierdurch wird gewährleistet, dass der Reibring vollständig in radialer Richtung von Kühlluft durchströmt werden kann. Die Belüftungsöffnungen (41) oder geöffneten Lüftungskanäle (42) erstrecken sich dabei bevorzugt nicht über die gesamte Dicke des Reibrings. Vielmehr wird die Bremsscheibe bevorzugt in einen Bereich der Verzahnung ohne Belüftungsöffnungen oder - kanäle und einen Bereich mit Lüftungen aber ohne Verzahnung eingeteilt. Hierzu sind die Belüftungsöffnungen (41) oder geöffneten Lüftungskanäle (42) nur außerhalb des Verzahnungsbereiches aus Außenverzahnung (14) und Innenverzahnung (22) angeordnet.

Fig. 2 zeigt eine Ausführung, bei welcher die Dicke des Verzahnungs- und des Belüftungs-bereiches bei etwa jeweils der Hälfte der Bremsscheibendicke liegt. Bevorzugt liegt die Dicke des Belüftungsbereiches, über den sich die Belüftungsöffnungen, bzw. offenen Kanäle erstrecken, bei 20 bis 70 % der Reibringdicke.

Fig. 3 zeigt eine Bremsscheibe mit Reibring nach dem aufsetzen auf den Flanschbereich der Radnabe (10) bzw. den Bremsscheibentopf. Der Bereich der nach innen geöffneten Lüftungskanäle (41) steht dabei seitlich über; die Kanäle sind dabei außerhalb des Flanschbereiches nach innen geöffnet. Die Kanäle haben im Außenumfang des Reibrings in etwa die doppelte Dicke, wie auf den jeweils gegenüberliegenden nach innen gerichteten Öffnungen in Form von geöffneten Lüftungskanälen (41).

Zum Zusammenbau der Scheibenbremse wird demzufolge zunächst der Reibring 18 auf den Flanschbereich 12 aufgesteckt, wodurch die Außenverzahnung 14 des Flanschbereichs 12 mit der Innenverzahnung 22 des Reibrings 18 in Eingriff kommt, wodurch sich die Formschlussverbindung 24 bildet. Somit ist der Reibring 18 in radialer Richtung bzw. Umfangsrichtung an der Radnabe 10 festgelegt. Die axiale Fixierung des Reibrings 18 an der Radnabe 10 wird im Anschluss daran dadurch vorgenommen, dass entsprechende Hülsen 28 in die korrespondierenden Aufnahmeöffnungen 38 des Reibrings 18 eingesteckt werden, wonach die jeweiligen Schrauben 30 in die korrespondierenden Gewindebohrungen 34 des Flanschbereichs 12 der Radnabe 10 eingeschraubt werden können.

## Patentansprüche

1. Scheibenbremse, insbesondere für einen Kraftwagen, mit einer Bremsscheibe und mit einer Radnabe (10) und einem Reibring (18), welche radial durch eine Formschlussverbindung (24) aus Außenverzahnung (14) und Innenverzahnung (22) und axial durch wenigstens ein Sicherungselement (26) fest miteinander verbunden sind, wobei der Reibring (18) im Bereich der Aufnahmeöffnung (38) relativ zu dem Sicherungselement (26) radial bewegbar ist,
wobei eine Aufnahmeöffnung (38) als Durchgangsöffnung ausgebildet ist, welche den Reibring (18) von einer Außenumfangsseite (40) bis zur Radnabe (10) radial durchsetzt, **dadurch gekennzeichnet dass** wenigstens eine axiale Sicherungselement (26) in der radial innerhalb des Reibrings (18) verlaufenden Aufnahmeöffnung (38) angeordnet ist dass das Sicherungselement (26) eine mittels einer Schraube (30) an der Radnabe (10) befestigte Hülse (28) umfasst, welche die Schraube (30) außenumfangsseitig umgibt
und dass der Reibring zum Flanschbereich (12) hin Belüftungsöffnungen (41) oder geöffnete Lüftungskanäle (42) aufweist, die nur außerhalb des Verzahnungsbereiches aus Außenverzahnung (14) und Innenverzahnung (22) angeordnet sind.

2. Scheibenbremse nach Anspruch 1,
**dadurch gekennzeichnet,**
**dass** sich die Belüftungsöffnungen (41) oder geöffneten Lüftungskanäle (42) über 20 bis 70 % der Dicke des Reibrings erstrecken, wobei der verbleibende Dickenbereich mit der Innenverzahnung (22) versehen ist.

3. Scheibenbremse nach einem der voran gegangenen Ansprüche,
**dadurch gekennzeichnet,**
**dass** die Schraube (30) von der Außenumfangsseite (40) des Reibrings (18) her eingeschraubt ist, wobei ein Schraubenkopf (32) im Querschnitt kleiner bemessen ist als die Aufnahmeöffnung (38).

4. Scheibenbremse nach einem der voran gegangenen Ansprüche,
**dadurch gekennzeichnet,**
**dass** die Hülse (28) im Querschnitt an die Aufnahmeöffnung (38) des Reibrings (18) angepasst ist.

5. Scheibenbremse nach einem der voran gegangenen Ansprüche,
**dadurch gekennzeichnet,**
**dass** eine Mehrzahl von Sicherungselementen (26) vorgesehen ist, welche in vorzugsweise gleichen gegenseitigen Winkeln verteilt angeordnet sind.

6. Verfahren zum Zusammenbau einer Scheibenbremse, insbesondere für einen Kraftwagen, deren Reibring zum Flanschbereich (12) hin Belüftungsöffnungen (41) oder geöffnete Lüftungskanäle (42) aufweist, bei welchem eine Radnabe (10) und ein Reibring (18) zur gegenseitigen radialen Festlegung unter Bildung einer Formschlussverbindung (24) zusammen gesteckt und axial durch wenigstens ein Sicherungselement (26) fest miteinander verbunden werden,
das wenigstens eine axiale Sicherungselement (26) in einer radial innerhalb des Reibrings (18) verlaufenden Aufnahmeöffnung (38) angeordnet und an der Radnabe (10) befestigt wird,
und dass
die Belüftungsöffnungen (41) oder geöffnete Lüftungskanäle (42) nur außerhalb des Verzahnungsbereiches aus Außenverzahnung (14) und Innenverzahnung (22) angeordnet werden.

## Claims

1. Disc brake, in particular for a motor vehicle, comprising a brake disc and a wheel hub (10) and a friction ring (18) which are securely connected to each other by a positive connection (24) consisting of external toothing (14) and internal toothing (22) in the radial direction and by at least one securing element (26) in the axial direction, wherein the friction ring (18) is radially movable relative to the securing element (26) in the region of the location opening (38), wherein a location opening (38) is designed as a through-opening which radially passes through the friction ring (18) from an outer circumferential side (40) to the wheel hub (10), **characterised in that** the at least one axial securing element (26) is located in the location opening (38) which extends radially within the friction ring (18), **in that** the securing element (26) comprises a sleeve (28) which is secured to the wheel hub (10) by means of a screw (30) and which surrounds the outer circumference of the screw (30), and **in that** the friction ring is provided with vent openings (41) or venting passages (42) which are open towards the flange region (12) and which are provided only outside the toothed region with its external toothing (14) and its internal toothing (22).

2. Disc brake according to claim 1,
**characterised in that**
the vent openings (41) or open venting passages (42) extend across 20% to 70% of the thickness of the friction ring, the remaining part of its thickness being covered by the internal toothing (22).

3. Disc brake according to any of the preceding claims,
**characterised in that**
the screw (30 is tightened from the outer circumferential side (40) of the friction ring (18), a screw head (32) having a smaller cross-section than the location opening (38).

4. Disc brake according to any of the preceding claims,
**characterised in that**
the cross-section of the sleeve (28) is matched to the location opening (38) of the friction ring (18).

5. Disc brake according to any of the preceding claims,
**characterised in that**
a plurality of securing elements (26) is provided, which are preferably distributed at identical mutual angles.

6. Method for the assembly of a disc brake, in particular for a motor vehicle, the friction ring of which is provided with vent openings (41) or venting passages (42) open towards the flange region (12), wherein a wheel hub (10) and a friction ring (18) are pushed together for mutual radial location while forming as positive connection (24) and are axially connected securely to each other by at least one securing element (26),
wherein the at least one axial securing element (26) is located in a location opening (38) extending radially within the friction ring (18) and is secured to the wheel hub (10)
and wherein the vent openings (41) or venting passages (42) are provided only outside the toothed region with its external toothing (14) and its internal toothing (22).

## Revendications

1. Frein à disque, notamment pour un véhicule à moteur, comprenant un disque de frein, un moyeu (10) de roue et un anneau de friction (18), qui sont fixement reliés l'un à l'autre par un raccord par complémentarité de forme (24) à denture extérieure (14) et à denture intérieure (22) en direction radiale et par au moins un élément de fixation (26) en direction axiale, l'anneau de friction (18) pouvant se déplacer radialement par rapport à l'élément de fixation (26) dans la région de l'ouverture de réception (38), une ouverture de réception (38) étant conçue comme une ouverture de passage, laquelle introduit radialement l'anneau de friction (18)du côté périphérique extérieure (40) jusqu'au moyeu (10) de roue, **caractérisé en ce qu'**au moins un élément de fixation axial (26) se trouve dans l'ouverture de réception (38) qui s'étend radialement à l'intérieur de l'anneau de friction (18), lement (26) eine mittels einer Schraube (30) an der Radnabe (10) befestigte Hülse (28) **en ce que** l'élément de fixation (26) comprend un manchon (28) fixé au moyeu (10) de roue au moyen d'une vis (30), lequel manchon entoure la vis (30) du côté périphérique extérieur, et **en ce que** l'anneau de friction présente jusque dans la région de la bride (12) des ouvertures d'aération (41) ou des canaux d'aération ouverts (42), qui sont disposés uniquement à l'extérieur de la région de denture extérieure (14) et de denture intérieure (22).

2. Frein à disque selon la revendication 1, **caractérisé en ce que** les ouvertures d'aération (41) ou les canaux d'aération (42) ouverts s'étendent sur 20 à 70 % de l'épaisseur de l'anneau de friction, la plage d'épaisseur restante est pourvue de denture intérieure (22).

3. Frein à disque selon l'une quelconque des revendications précédentes, **caractérisé en ce que** la vis (30) est vissée du côté périphérique extérieur (40) de l'anneau de friction (18), une tête de vis (32) présentant une section transversale plus petite que l'ouverture de réception (38).

4. Frein à disque selon l'une quelconque des revendications précédentes, **caractérisé en ce que** la section transversale du manchon (28) est adaptée à l'ouverture de réception (38) de l'anneau de friction (18).

5. Frein à disque selon l'une quelconque des revendications précédentes, **caractérisé en ce qu'**il est prévu une pluralité d'éléments de fixation (26) qui est répartie à des angles de préférence égaux les uns aux autres.

6. Procédé pour l'assemblage d'un frein à disque, en particulier pour un véhicule à moteur, dont l'anneau de friction présente jusque dans la zone de la bride (12) des ouvertures d'aération (41) ou des canaux d'aération ouverts (42), pour lequel un moyeu (10) de roue et un anneau de friction (18) sont enfichés l'un dans l'autre servant à la fixation radiale mutuelle pour former un raccord par complémentarité de forme (24) et reliés l'un à l'autre dans la direction axiale au moins par un élément de fixation (26) et au moins un élément de fixation (26) axial est disposé dans une ouverture de réception (38) s'étendant dans la direction radiale à l'intérieur de l'anneau de friction (18) et les ouvertures d'aération (41) ou les canaux d'aération ouverts (42) sont disposés uniquement à l'extérieur de la zone de denture extérieure (14) et de denture intérieure (22).
